# DEMANDE DE BREVET EUROPEEN

(11) **EP 1 077 369 A1**
(43) Date de publication de la demande: **21.02.2001**
(21) Numéro de dépôt: 00402262.0
(22) Date de dépôt: 10.08.2000
(51) Int. Cl.: G01L 23/22

(54) **Bougie d'allumage équipée d'un capteur de pression, et moteur thermique équipé de telles bougies**

(30) Priorité: 18.08.1999 FR 9910592
(71) Demandeur: Drecq, Daniel, 78610 Saint Léger en Yvelines (FR)
(72) Inventeur: Drecq, Daniel, 78610 Saint Léger en Yvelines (FR)
(74) Mandataire: Abello, Michel

(57) **Abrégé**

Bougie d'allumage, pour moteur thermique, comportant un culot métallique (2) avec une partie d'extrémité (3) filetée extérieurement pour vissage dans un trou taraudé d'une culasse, le culot supportant à l'intérieur un corps isolant (4) traversé par une électrode centrale (5) propre à être reliée à une haute tension, une chambre annulaire (10) étant délimitée par une surface intérieure (11) au niveau de la partie d'extrémité filetée (3) du culot et la surface extérieure de l'extrémité du corps isolant (4), la bougie d'allumage étant en outre équipée d'au moins un capteur de pression (C), et étant agencée pour soumettre ce capteur à la pression d'une chambre de combustion associée lorsque la bougie est en place. Le capteur de pression (C) est implanté dans la partie d'extrémité filetée (3) du culot délimitant la chambre annulaire (10), à l'extérieur radialement de la surface interne (11) de cette partie d'extrémité de manière telle que la géométrie de la chambre annulaire (10) ne soit pas modifiée par la présence du capteur.

## Description

L'invention est relative à une bougie d'allumage, pour moteur thermique, comportant un culot métallique avec une partie d'extrémité filetée extérieurement pour vissage dans un trou taraudé d'une culasse, le culot supportant à l'intérieur un corps isolant, en particulier en céramique, traversé par une électrode centrale propre à être reliée à une haute tension, une chambre annulaire étant délimitée par une surface intérieure au niveau de la partie d'extrémité filetée du culot et la surface extérieure de l'extrémité du corps isolant, la bougie d'allumage étant en outre équipée d'au moins un capteur de pression, en particulier du type résistant, et étant agencée pour soumettre ce capteur à la pression d'une chambre de combustion associée lorsque la bougie est en place.

La mesure de pression dans le cylindre d'un moteur thermique est d'une grande importance, compte tenu des calculs thermodynamiques ultérieurs qui peuvent être faits à partir du cycle de pression.

La précision de la mesure de la pression, ainsi que le calage angulaire du cycle sont prépondérants pour le calcul de l'énergie dégagée par la combustion.

Il a déjà été proposé de réaliser cette mesure avec des capteurs piézo-électriques basés sur des cristaux de quartz. Le cristal de quartz est comprimé par la pression régnant dans le cylindre. L'application de la pression sur le quartz génère une quantité de courant, qui s'exprime en picocoulombs, laquelle doit être amplifiée dans un amplificateur de charge. Cette solution est à la fois onéreuse pour le capteur et pour l'amplificateur, et sa mise en oeuvre est difficile car une dérive de la minuscule quantité de courant est fréquente. Ce type de mesure s'accompagne d'une procédure et de vérifications fréquentes des matériels.

En outre, un capteur piézo-électrique donne une bonne représentation de la différence ou de la variation de pression appliquée sur le capteur, mais ne fournit pas la valeur réelle ou absolue de la pression. L'étalonnage de ce décalage ou "offset" est toujours un problème.

On a donc proposé de remplacer les capteurs piézo-électriques par des capteurs piézo-résistifs. Ces derniers présentent deux avantages :
- ils donnent la valeur réelle de la pression absolue,
- l'amplification du signal de sortie est très simple, par un pont de Wheatstone.

Par contre, les capteurs piézo-résistifs présentent l'inconvénient d'une mauvaise résistance à la température. Il est cependant possible de trouver actuellement des capteurs piézo-résistifs capables de supporter des températures de l'ordre de 250°C, ce qui est suffisant pour une implantation dans des bougies d'allumage.

Diverses solutions ont été proposées pour l'implantation de capteurs, en particulier de capteurs piézo-résistifs, dans la bougie.

Toutefois, les implantations proposées jusqu'à ce jour ne donnent pas entière satisfaction car elles perturbent le déroulement de la combustion et conduisent à des valeurs de pression mesurées différentes des valeurs réelles. Certaines implantations faisant intervenir un trou de volume non négligeable pour amener la pression sur le capteur modifient le volume de la chambre et donnent naissance à des signaux résonnants non conformes au phénomène réel de combustion.

La présente invention a pour but, principalement, de proposer une implantation du capteur de pression, en particulier d'un capteur piézo-résistif, qui évite toute modification sensible du déroulement de la combustion et qui permette d'obtenir des valeurs de pression mesurées aussi exactes que possible, tout en assurant une bonne protection du capteur contre la chaleur.

Selon l'invention, une bougie d'allumage pour moteur thermique, du type défini précédemment, équipée d'un capteur de pression, est caractérisée par le fait que le capteur de pression est implanté dans la partie d'extrémité filetée du culot délimitant la chambre annulaire, à l'extérieur radialement de la surface interne de cette partie d'extrémité de manière telle que la géométrie de la chambre annulaire ne soit pas modifiée par la présence du capteur.

De préférence la partie d'extrémité filetée du culot comporte, vers l'intérieur, un évidement pour recevoir une virole propre à reproduire la géométrie de la chambre annulaire ; la virole comporte, sur sa surface externe, un logement pour le capteur qui est ainsi enfermé dans un espace clos limité par la virole et la paroi de l'évidement, au moins un trou de diamètre réduit étant prévu dans la paroi de la virole pour admettre la pression de la chambre de combustion sur le capteur.

L'espace clos laissé au capteur le protège contre la température de la chambre de combustion.

Dans une variante, le capteur est collé sur la face externe du logement de la virole et le trou débouche dans ledit logement à distance du capteur, de façon que ce dernier soit soumis à la pression de la chambre de combustion par sa face opposée à celle qui est collée à la virole.

Dans une autre variante, le capteur est collé sur la face externe du logement de la virole et le trou débouche sur la face du capteur qui est collée à la virole.

La virole peut être collée dans l'évidement de la partie d'extrémité filetée du culot. Le capteur peut être collé dans le logement de la virole.

Dans une forme de réalisation particulière, au moins une électrode de masse est reliée au culot et à la masse, les pointes desdites électrodes étant espacées d'une distance prédéterminée. La virole peut comporter au moins une rainure pour le passage de la (des) électrode(s) de masse.

Le capteur de pression peut être diamétralement opposé à l'électrode de masse.

Plusieurs capteurs de pression peuvent être prévus sur la virole.

Dans une autre forme de réalisation, la virole comporte au moins une extension axiale formant une électrode de masse, les pointes de l'électrode centrale et de la (des) électrode(s) de masse étant espacées d'une distance prédéterminée.

Avantageusement, au moins un canal est percé dans le culot, parallèlement à l'axe de la bougie, et débouche à une extrémité dans l'espace clos où est logé le capteur et à son autre extrémité dans un espace relié à l'extérieur, ce canal permettant le passage de fils conducteurs pour la sortie des signaux électriques du capteur de pression.

Au moins un capteur de température peut en outre être prévu sur la virole.

L'invention est également relative à un moteur thermique dont le ou les cylindres sont équipés de telles bougies.

L'invention consiste, mises à part les dispositions exposées ci-dessus, en certaines autres dispositions exposées à propos de deux modes de réalisation particuliers décrits en détail avec référence aux dessins ci-annexés, mais qui ne sont nullement limitatifs.
La figure 1, de ces dessins, est une coupe schématique axiale verticale, avec partie en extérieur, d'une bougie selon un premier mode de réalisation de l'invention ;
La figure 2 est une vue à plus grande échelle de l'extrémité de la bougie avec les pointes des électrodes et le capteur de pression ;
La figure 3 est une vue en perspective de la virole ;
La figure 4 est une vue analogue à la figure 1, mais représentant un deuxième mode de réalisation de la bougie de l'invention ;
La figure 5 est une vue agrandie d'un détail encerclé sur la figure 4, et repéré par le chiffre V ;
La figure 6 est une vue en élévation de la virole de la figure 4 ;
La figure 7 est une vue en coupe suivant la ligne VII-VII de la figure 6.

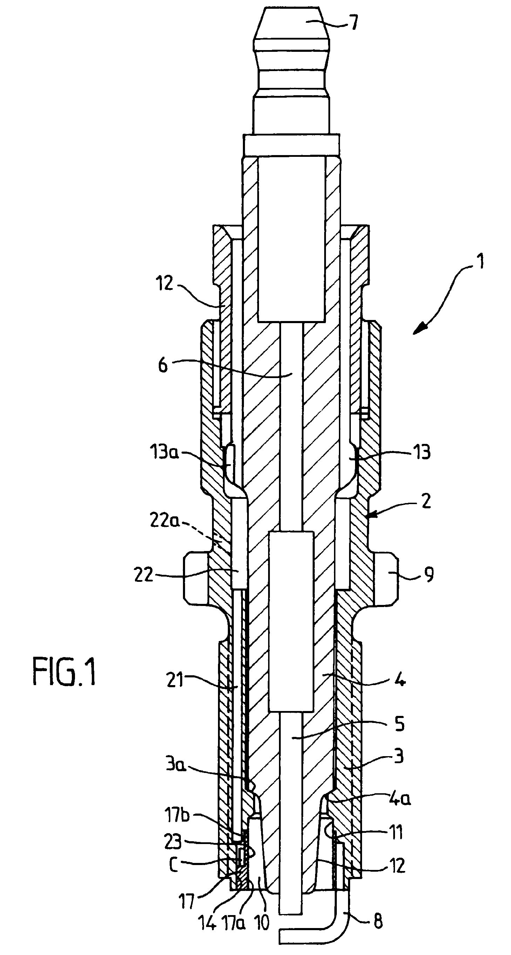

En se reportant à la figure 1 des dessins, on peut voir une bougie d'allumage 1 pour moteur thermique, selon un premier mode de réalisation de l'invention, comportant un culot métallique 2 ayant une partie d'extrémité 3 filetée extérieurement pour vissage dans un trou taraudé d'une culasse (non représentée) s'ouvrant dans une chambre de combustion d'un cylindre (non représenté).

Le culot 2 supporte, à l'intérieur, un corps isolant 4 en céramique traversé par une électrode centrale 5 reliée, par une tige de connexion 6, à une borne 7 sur laquelle est appliquée une haute tension électrique, à des instants appropriés.

Une seconde électrode 8 reliée au culot 2 est constituée par une barrette métallique, recourbée à angle droit vers l'intérieur. Les pointes des deux électrodes sont espacées d'une distance prédéterminée pour la production d'une étincelle. L'électrode 8 est reliée à la masse par l'intermédiaire du culot 2 vissé dans la culasse. Dans l'exemple représenté sur Fig.1, le culot 2 comporte, sensiblement à mi-longueur, une partie 9 en forme d'écrou pour vissage et dévissage. Une étanchéité est réalisée entre le culot 2 et la culasse du côté de l'écrou 9 opposé à la borne 7.

Une chambre annulaire 10, s'ouvrant vers la chambre de combustion lorsque la bougie 1 est en place sur la culasse, est délimitée par la surface intérieure cylindrique 11 de la partie filetée 3 et par la surface extérieure 12 de l'extrémité du corps isolant 4 voisine de la pointe de l'électrode 5. Dans l'exemple représenté, la surface 12 est légèrement tronconique, sa petite base étant située vers la pointe de l'électrode 5.

Le corps isolant 4 comporte un épaulement tronconique 4a en appui de manière étanche, par exemple avec interposition d'un joint en cuivre, contre un autre épaulement intérieur tronconique 3a de la partie filetée 3. Le corps isolant 4 peut être bloqué dans le culot 2 par un manchon 12 prenant appui axialement contre un bourrelet 13 du corps 4, le manchon 12 étant engagé et bloqué dans le culot 2 à l'extrémité opposée aux pointes des électrodes.

La bougie d'allumage 1 est équipée d'un capteur de pression C piézo-résistif. Ce capteur de pression C est implanté dans la partie d'extrémité 3 du culot délimitant la chambre annulaire 10, à l'extérieur radialement de la surface interne 11 de manière telle que la géométrie de la chambre annulaire ne soit pas modifiée par la présence du capteur.

Autrement dit, la surface interne 11 de la chambre annulaire 10 d'une bougie équipée d'un capteur selon l'invention conserve la même forme cylindrique et les mêmes dimensions que dans une bougie non équipée du capteur C. Il n'y a donc aucune modification de la micro-géométrie de l'espace 10 de façon à ne pas modifier le déroulement de la combustion.

Selon une solution avantageuse, la partie d'extrémité 3 comporte, vers l'intérieur, un évidement 14 étagé comprenant un premier alésage cylindrique 14a coaxial à l'électrode centrale 5. Cet alésage 14a débouche vers la chambre de combustion et, de l'autre côté, s'étend jusqu'à un décrochement 15 radial vers l'intérieur. Un deuxième alésage 14b de diamètre plus petit que l'alésage 14a, fait suite au décrochement 15 sur une longueur axiale inférieure à celle de l'alésage 14a. L'extrémité de cette deuxième partie 14b est marquée par un décrochement radial 16 vers l'intérieur qui permet de rejoindre la surface cylindrique 11 de l'alésage d'extrémité de la partie 3.

Une virole 17 métallique est prévue pour se loger dans l'évidement 14 et pour reproduire la géométrie de la chambre annulaire 10. La virole 17 remplit l'évidement 14 de telle sorte que la surface cylindrique intérieure 17i de la virole se trouve dans l'alignement de la partie supérieure de la surface cylindrique 11 qu'elle reconstitue et prolonge jusqu'à l'extrémité ouverte vers la chambre de combustion.

La virole 17 comporte un manchon 17a qui vient se loger dans la partie 14a de l'évidement 14, surmonté d'une collerette 17b moins épaisse, qui vient remplir la partie 14b de l'évidement. Sur la surface externe cylindrique de la virole 17, un logement 18, réalisé par exemple par fraisure, est prévu pour recevoir le capteur C. Le logement 18 est limité, du côté de la chambre de combustion, par un épaulement 19, tandis qu'il est ouvert du côté opposé.

Une rainure 20, parallèle à l'axe de la virole 17 est usinée, par exemple dans une position diamétralement opposée au logement 18, dans la surface externe de la virole pour permettre le passage de l'électrode 8, avant son pliage, lors du montage de la virole 17 dans le culot 3 de la bougie.

La fixation de la virole 17 dans l'évidement 14 du culot 3 peut être réalisée par collage.

Au moins un canal 21 est percé dans le culot, parallèlement à l'axe de la bougie, pour déboucher, à une extrémité, dans la partie 14a de l'évidement 14. A son autre extrémité, le canal 21 débouche dans un espace 22 relié à l'extérieur.

La liaison de l'espace 22 avec l'extérieur peut être assurée par au moins une rainure 13a prévue dans le bourrelet 13. Selon une autre possibilité, la sortie des fils de liaison du capteur C peut être assurée par un trou oblique 22a prévu dans la paroi du culot 2 au voisinage de l'écrou 9, du côté de cet écrou opposé à l'extrémité filetée 3.

Le capteur C peut être fixé dans le logement 18 par collage. Au montage, les fils de liaison du capteur sont engagés dans le canal 21, alors que la virole 17 est orientée angulairement de telle sorte que le logement 18 soit centré sur le canal 21. L'électrode 8 n'est pas encore recourbée vers l'intérieur de sorte que la virole 17 peut être engagée par coulissement et collée dans l'évidement 14, l'électrode 8 passant dans la rainure 20. Après mise en place de la virole 17, l'électrode 8 peut être recourbée à angle droit.

Au moins un trou 23 de diamètre réduit, de l'ordre de quelques dixièmes de millimètre, est prévu dans la partie mince 24 de la virole limitant le logement 18 vers l'intérieur. De préférence, plusieurs trous 23 sont prévus pour établir une communication entre le logement 18 et la chambre 10, de sorte que le capteur C soit soumis à la pression régnant dans la chambre de combustion. Le ou les trous 23 ne posent pas de problème de résonance car leur diamètre est extrêmement petit et leur longueur est réduite car l'épaisseur de la partie 24 de la paroi est faible, de l'ordre de quelques dixièmes de millimètres.

Selon l'invention, le capteur C est logé dans un espace clos, protégé de la température de la chambre de combustion.

Plusieurs cellules de capteur de pression peuvent être installées à la périphérie de la virole 17, avant son collage sur le culot de la bougie, d'une manière semblable à celle décrite à propos du logement 18.

De même, des capteurs de température peuvent être installés sur la virole 17 avant son collage.

Le passage et la sortie des fils de liaison des capteurs par des canaux tels que 21 qui peuvent être bouchés de manière étanche, permet de supprimer les problèmes de température et d'étanchéité.

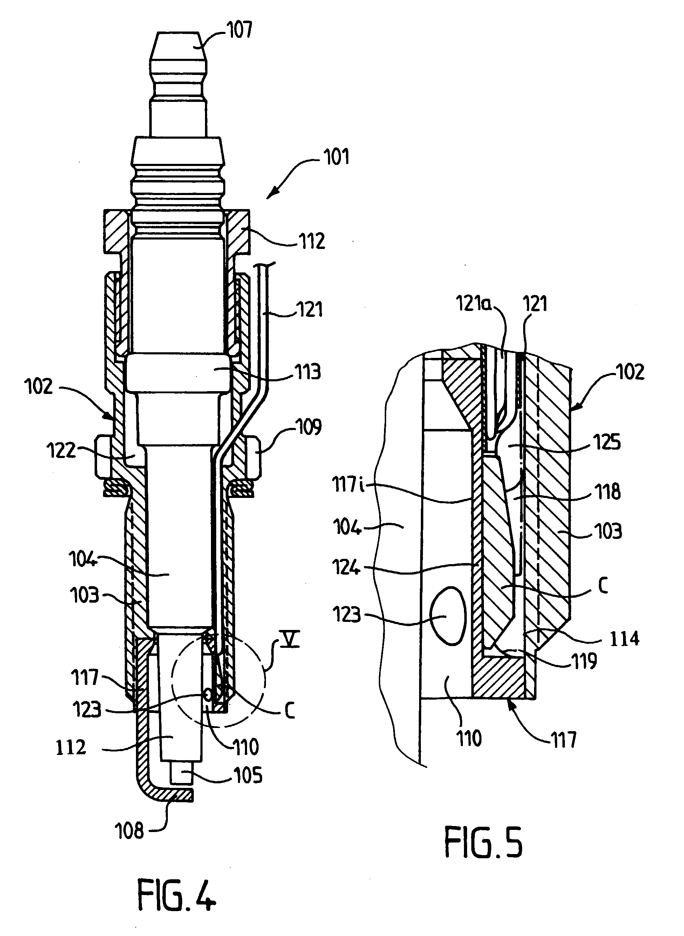

Sur les figures 4 à 7, on a représenté un deuxième mode de réalisation de la bougie de l'invention, dont les éléments identiques ou analogues à ceux du premier mode de réalisation portent les mêmes chiffres de référence augmentés d'une centaine.

La bougie 101 selon le second mode de réalisation comporte une électrode de masse 108 qui fait corps avec la virole 117 et qui est constituée par une barrette métallique s'étendant sensiblement parallèlement à l'axe de la bougie, à partir de la paroi cylindrique de la virole 117 vers l'extérieur de la bougie, avec sa portion d'extrémité recourbée à angle droit vers l'intérieur. Les pointes des deux électrodes 108 et 105 sont espacées d'une distance prédéterminée pour la production d'une étincelle. L'électrode 108 est reliée à la masse par l'intermédiaire du culot 102 vissé dans la culasse.

La chambre annulaire 110, s'ouvrant vers la chambre de combustion, lorsque la bougie 101 est en place sur la culasse, est délimitée par la surface intérieure cylindrique 117i de la virole 117 et par la surface extérieure tronconique 112 de l'extrémité du corps isolant 104, voisine de la pointe de l'électrode 105.

Le capteur de pression C est implanté dans la partie d'extrémité 103 du culot délimitant la chambre annulaire 110, à l'extérieur radialement de la surface interne 117i de la virole 117, de manière telle que la géométrie de la chambre annulaire ne soit pas modifiée par la présence du capteur. Cette partie d'extrémité 103 comporte, vers l'intérieur, un évidement 114 contre la surface latérale duquel est collée la partie cylindrique extérieure de la virole 117. La virole 117 remplit complètement l'évidement 114 de telle sorte que sa surface cylindrique intérieure 117i se trouve dans l'alignement de la partie interne du culot 103, au-dessus de l'évidement 114.

Sur la surface externe cylindrique de la virole 117, un logement 118 sensiblement en forme de L est réalisé, par exemple par fraisure. La grande jambe de ce logement 118 s'étend parallèlement à l'axe de la bougie et débouche vers l'intérieur de la bougie, à l'opposé de l'électrode 108. L'autre petite jambe 119 du logement 118 s'étend sur un arc de cercle et le trou 123 débouche dans la petite jambe 119, à distance du capteur C qui est logé dans la grande jambe du logement 118. Le trou 123 est formé dans une portion de paroi mince 124 de la virole 117, cette portion de paroi mince 124 étant définie au droit du logement 118 en L. Bien entendu, il pourrait y avoir plusieurs trous 123, à condition que ces derniers ne débouchent pas au droit du capteur C.

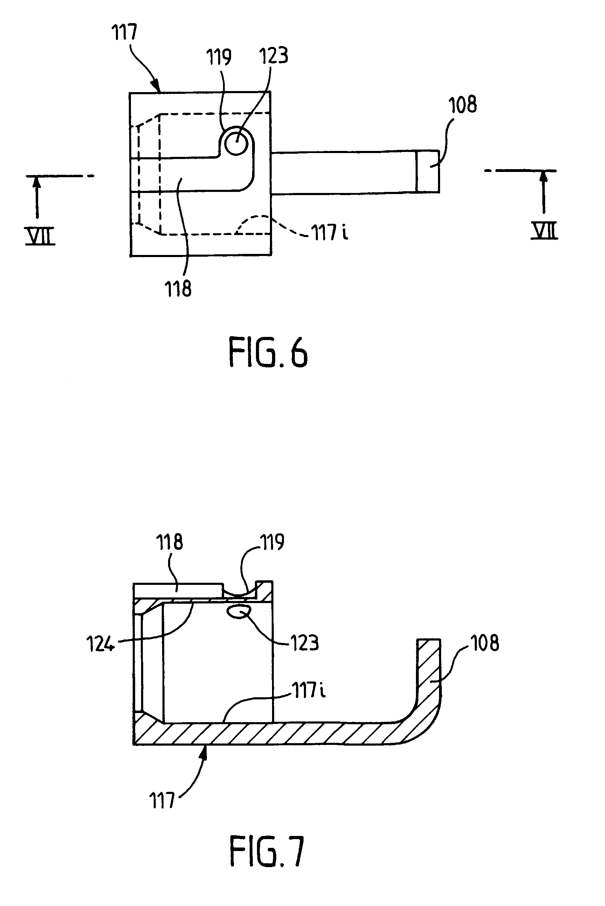

Au moins un canal est percé dans le culot 102, parallèlement à l'axe de la bougie, pour déboucher, à une extrémité dans l'évidement 114 et, à son extrémité opposée dans un espace 122 relié à l'extérieur. Ce canal est destiné à recevoir un câble de liaison 121 pour le capteur C, le câble 121 étant destiné à traverser un trou oblique prévu dans la paroi du culot 102 au voisinage de l'écrou 109, du côté de cet écrou opposé à l'extrémité filetée 103. Comme mieux visible sur la figure 5, le câble de liaison est constitué d'une gaine 121 collée ou brasée à la surface externe cylindrique de la virole 117 et d'une pluralité de fils de mesure 121a qui s'étendent à l'intérieur de la gaine. Une garniture d'étanchéité 125 est agencée dans le logement 118 de façon à assurer l'étanchéité entre les fils 121a et le capteur C.

Sur la figure 4, est visible un joint d'étanchéité en appui contre la partie 109 du culot 102 de la bougie et destiné à venir en appui contre la culasse.

Le fait de prévoir l'électrode de masse 108 directement sur la virole 117 permet un usinage plus facile. Bien entendu, il est possible de prévoir une bougie à plusieurs électrodes de masse ou bien une bougie à électrode de masse annulaire, comme cela est le cas pour les bougies de moteur de compétition.

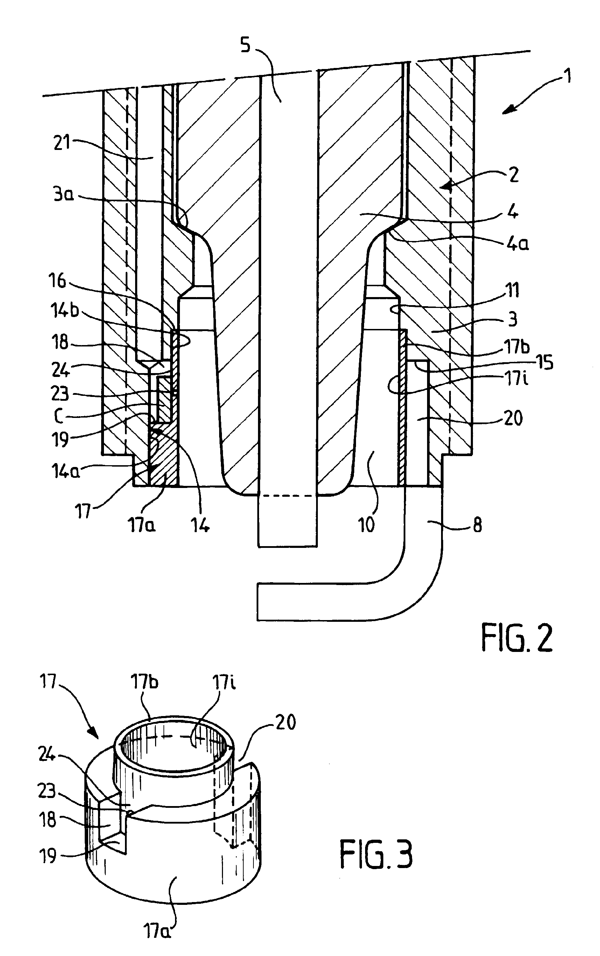

Dans le cas d'une bougie à une seule électrode de masse, illustrée sur les figures 1 à 7, l'étincelle peut éclater axialement entre l'extrémité inférieure de l'électrode 5, 105 et l'électrode de masse 8, 108 en vis-à-vis. Dans le cas d'une bougie à plusieurs électrodes de masse, celles-ci ont leur extrémité inférieure recourbée radialement vers l'électrode centrale, de façon que la ou les étincelles éclatent radialement. Dans le cas des bougies pour moteurs de compétition à électrode de masse annulaire, la virole comporte une collerette interne radialement saillante vers l'électrode centrale pour que l'étincelle éclate n'importe où sur la périphérie de l'électrode centrale.

## Revendications

1. Bougie d'allumage (1, 101), pour moteur thermique, comportant un culot métallique (2, 102) avec une partie d'extrémité (3, 103) filetée extérieurement pour vissage dans un trou taraudé d'une culasse, le culot supportant à l'intérieur un corps isolant (4, 104), en particulier en céramique, traversé par une électrode centrale (5, 105) propre à être reliée à une haute tension, une chambre annulaire (10, 110) étant délimitée par une surface intérieure (11, 117i) au niveau de la partie d'extrémité filetée (3, 103) du culot et la surface extérieure de l'extrémité du corps isolant (4, 104), la bougie d'allumage étant en outre équipée d'au moins un capteur de pression (C), en particulier du type résistant, et étant agencée pour soumettre ce capteur à la pression d'une chambre de combustion associée lorsque la bougie est en place, le capteur de pression (C) étant implanté dans la partie d'extrémité filetée (3, 103) du culot délimitant la chambre annulaire (10, 110), à l'extérieur radialement de la surface interne (11, 117i) de cette partie d'extrémité de manière telle que la géométrie de la chambre annulaire (10, 110) ne soit pas modifiée par la présence du capteur, caractérisée par le fait que la partie d'extrémité filetée (3, 103) du culot comporte, vers l'intérieur, un évidement (14, 114) pour recevoir une virole (17, 117) propre à reproduire la géométrie de la chambre annulaire (10, 110).

2. Bougie selon la revendication 1, caractérisée par le fait que le capteur (C) est un capteur piézo-résistif.

3. Bougie selon la revendication 1 ou 2, caractérisée par le fait que la virole (17, 117) comporte, sur sa surface externe, un logement (18, 118) pour le capteur qui est ainsi enfermé dans un espace clos limité par la virole (17, 117) et la paroi de l'évidement (14, 114), au moins un trou (23, 123) de diamètre réduit étant prévu dans une partie mince (24, 124) de la paroi de la virole pour admettre la pression de la chambre de combustion sur le capteur.

4. Bougie selon l'une quelconque des revendications précédentes, caractérisée par le fait que l'évidement (14) est étagé et comprend un premier alésage cylindrique (14a) coaxial à l'électrode centrale (5), cet alésage (14a) débouchant vers la chambre de combustion et, de l'autre côté, s'étendant jusqu'à un décrochement (15) radial vers l'intérieur, et un deuxième alésage (14b) de diamètre plus petit que l'alésage (14a), qui fait suite au décrochement (15), l'extrémité de ce deuxième alésage (14b) étant marquée par un décrochement radial (16) vers l'intérieur qui permet de rejoindre la surface cylindrique (11) de l'alésage d'extrémité de la partie (3).

5. Bougie selon la revendication 4, caractérisée par le fait que la virole (17) comporte un manchon (17a) qui vient se loger dans la partie (14a) de l'évidement (14), surmonté d'une collerette (17b) moins épaisse, qui vient remplir la partie (14b) de l'évidement, le logement (18) étant réalisé sur la surface externe cylindrique de la virole (17).

6. Bougie selon l'une des revendications 3 à 5, caractérisée par le fait que la virole (17, 117) est collée dans l'évidement (14, 114) de la partie d'extrémité filetée (3, 103) du culot.

7. Bougie selon la revendication 3, caractérisée par le fait que le capteur (C) est collé sur la face externe du logement (118) de la virole (117) et le trou (123) débouche dans ledit logement à distance du capteur, de façon que ce dernier soit soumis à la pression de la chambre de combustion par sa face opposée à celle qui est collée à la virole.

8. Bougie selon la revendication 3, caractérisée par le fait que le capteur (C) est collé sur la face externe du logement (18) de la virole (17) et le trou (23) débouche sur la face du capteur qui est collée à la virole.

9. Bougie selon l'une des revendications précédentes, dans laquelle au moins une électrode de masse (8) est reliée au culot et à la masse, les pointes desdites électrodes (5, 8) étant espacées d'une distance prédéterminée , caractérisée par le fait que la virole (17) comporte au moins une rainure (20) pour le passage de la (des) électrode(s) de masse (8).

10. Bougie selon l'une des revendications 1 à 9, caractérisée par le fait que la virole (117) comporte au moins une extension axiale formant une électrode de masse (108), les pointes de l'électrode centrale (105) et de la (des) électrode(s) de masse (108) étant espacées d'une distance prédéterminée.

11. Bougie selon l'une des revendications précédentes, caractérisée par le fait qu'au moins un canal (21, 121) est percé dans le culot (2, 102), parallèlement à l'axe de la bougie, et débouche à une extrémité dans l'espace clos où est logé le capteur (C) et à son autre extrémité dans un espace (22, 122) relié à l'extérieur, ce canal permettant le passage de fils conducteurs (121a) pour la sortie des signaux électriques du capteur de pression.

12. Bougie selon l'une des revendications précédentes, caractérisée par le fait qu'au moins un capteur de température est prévu sur la virole.

13. Moteur thermique dont le ou les cylindres sont équipés de bougies selon l'une quelconque des revendications 1 à 12.
